(19) **Europäisches Patentamt / European Patent Office / Office européen des brevets**

(11) **EP 4 749 523 A1**

(12) **EUROPEAN PATENT APPLICATION**

(43) Date of publication:
27.05.2026 Bulletin 2026/22

(21) Application number: 24215197.5

(22) Date of filing: 25.11.2024

(51) International Patent Classification (IPC):
$G06N\ 3/045^{(2023.01)}$  $G06N\ 3/0985^{(2023.01)}$

(52) Cooperative Patent Classification (CPC):
G06N 3/045; G06N 3/0985

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
  **10245 Berlin (DE)**
• **Bini, Massimo**
  **72072 Tübingen (DE)**

Remarks:
Amended claims in accordance with Rule 137(2) EPC.

(54) **DEVICE AND METHOD FOR TRAINING A NEURAL NETWORK**

(57) Computer-implemented method for training a neural network (60), wherein the neural network is configured to accept an input (x) characterizing at least one sensor measurement (S) and provide an output (y) characterizing a classification and/or regressions result of the at least one sensor measurement (S) and/or a probability of the sensor measurement (S) to occur among a set of sensor measurements or wherein the neural network (60) is configured to provide an output (y) characterizing a prediction of a sensor measurement for creating a training and/or test dataset for training another machine learning system, wherein the method for training comprises the steps of:
• Performing a singular value decomposition of a weight matrix or a weight tensor of the neural network (60);
• Grouping singular values and corresponding singular vectors into a plurality of groups based on the magnitudes of the singular values;
• Training the neural network (60) by adapting the singular values and/or singular vectors of only the group corresponding to the lowest singular values or adapting the singular values and/or singular vectors of only a predefined number of groups corresponding to the lowest singular values.

**Fig. 1**

EP 4 749 523 A1

## Description

Technical field

The invention concerns a computer implemented method for training a neural network, a method for using the neural network according got the training method, a training system, a control system, a computer program, and a machine-readable storage medium.

Prior art

Meng et al. "PiSSA: Principal Singular Values and Singular Vectors Adaptation of Large Language Models", 03.04.2024, available at https://arxiv.org/html/2404.02948v1 discloses a method for finetuning a neural network using singular value decomposition.

Adavntages of the invention

Neural networks are used as backbones for various technical applications including robotics, driver assistance systems, and manufacturing. The present invention relates to methods for training neural networks, and more particularly to methods for efficiently fine-tuning pre-trained neural networks using singular value decomposition (SVD). Large pre-trained neural networks have shown remarkable capabilities. However, adapting these large models to specific downstream tasks can be computationally expensive and resource-intensive. Fine-tuning the entire set of parameters often requires substantial computational resources and can lead to overfitting, especially when training data for the downstream task is limited.

Known method from the prior art have explored various approaches to address this challenge. Parameter-efficient fine-tuning (PEFT) methods like LoRA, ETHER, and others aim to reduce the number of trainable parameters by introducing low-rank adjustments or other compact representations. While these methods improve efficiency, they often lack the ability to target specific components within the network's weight matrices, potentially leading to suboptimal performance or instability. Another relevant technique, PiSSA (Principal Singular Values and Singular Vectors Adaptation), leverages SVD to decompose weight matrices and fine-tunes only a low-rank approximation based on the highest singular values. This approach prioritizes the most dominant components of the weight matrix but ignores the potential contribution of lower singular values, which might be crucial for certain tasks or datasets. Moreover, PiSSA and similar methods typically employ a fixed, pre-determined rank for the low-rank approximation and apply uniform adaptation to all parameters within that approximation.

In contrast, he invention proposes to decomposes weight matrices using SVD and groups the singular values and corresponding singular vectors into multiple groups and only optimizing the singular values and/or singular vectors of the group or groups corresponding to the lowest singular values. Advantageously, the inventors found that this approach, in contrast to especially PiSSA, leads to mitigating catastrophic forgetting when finetuning a neural network as the newly learned content during finetuning is "stored" in directions of the space of the weight matrix that have previously stored little to no information. In turn, the mitigation of catastrophic forgetting enables the finetuned neural network to perform better on both the original task that the neural network was trained for as well as on the new task the neural network is trained for. Additionally, training the neural network compared to standard training procedures is more resource efficient as only a subset of the weight matrices of the neural network is adapted.

Disclosure of the invention

In a first aspect, the invention concerns a computer-implemented method for training a neural network , wherein the neural network is configured to accept an input characterizing at least one sensor measurement and provide an output characterizing a classification and/or regressions result of the at least one sensor measurement and/or a probability of the sensor measurement to occur among a set of sensor measurements or wherein the neural network is configured to provide an output characterizing a prediction of a sensor measurement for creating a training and/or test dataset for training another machine learning system, wherein the method for training comprises the steps of:

- Performing a singular value decomposition of a weight matrix or a weight tensor of the neural network;
- Grouping singular values and corresponding singular vectors into a plurality of groups based on the magnitudes of the singular values;
- Training the neural network by adapting the singular values and/or singular vectors of only the group corresponding to the lowest singular values or adapting the singular values and/or singular vectors of only a predefined number of groups corresponding to the lowest singular values.

The neural network may especially be given in the form of a pre-trained neural network, in other words, the neural network may be pre-trained. Pre-training may especially be understood as the neural network being adapted for a specific task before being used in the method for training. A pre-trained neural network may be discriminated form a non-pre-trained neural network by analyzing the weights of the neural network. If they match a common probability distribution, especially a standard normal distribution, the neural network may be considered as non-pre-trained and pre-trained otherwise.

The neural network may especially be given in the form of a feed-forward neural network, especially a convolutional neural network, multi-layer perception or a transformer.

The expression "input characterizing a sensor measurement" may especially be understood as the input comprising or consisting of a value that is the result of a sensor measurement. In other words, the input provided to the neural network comprises or consists of numerical values obtained from physical reality by means of a sensor. The sensor may especially be an optical sensor, in particular a camera, a lidar, a radar, an ultrasonic sensor or a thermal camera. However, other types of sensors. The sensor measurement obtained from all these sensors may be understood as an image, i.e., the sensor measurement may especially be an image. If the sensor measurement is an image, the neural network may especially be understood to operate on the pixel values of the image, e.g., accept the pixel values of the image as input to perform its operations on.

The neural network can also be used as a virtual sensor by the input comprising or consisting of a sensor measurement of various type of sensors and predicting another physical entity that can be derived from the sensor measurement. Possible sensors for this kind of virtual sensor application are accelerometers, gyroscopes, GPS, inertial measurement units, proximity sensors, rotary encoders, temperature sensors, humidity sensors, pressure sensors, light sensors, air quality sensors, water quality sensors, and/or weather sensors.

The expression "output characterizing a classification and/or regression result" may likewise be understand as the output of the neural network comprising or consisting of a value that indicates a result of a classification (e.g., class index, probabilities for plurality of classes, etc.) or a regressions result, i.e., an integer or a real value. If the input characterizes an optical sensor, the output may especially describe physical parameters of the scene recorded by the optical sensor, e.g., classification the presence or absence of objects or other elements in the scene, performing object detection (here, the output characterizes both a classification and a regressions: classification of presence of object and/or class of the object as well as a regression result indicating the position and/or extension of the object, e.g., in terms of a bounding box), or performing a dense evaluation of the scene, e.g., a semantic segmentation and7Or instance segmentation. These outputs can be created for each of the optical sensors mentioned above.

The expression "probability of the sensor measurement to occur among a set of sensor measurements" can be understood as the neural network being able to model a distribution of the sensor measurements. In these cases, the neural network is hence able to determine a value indicative of a probability of the sensor measurement to occur in the real world. The value indicative of the probability may, for example, be a likelihood, a log-likelihood, a density value, or a directly a probability. Typical neural network architectures for providing such values are variational auto encoders, normalizing flows, or diffusion models. The neural network may hence be configured as a normalizing flow, a diffusion model or the encoder of a variational auto encoder.

The expression "neural network being configured to provide an output characterizing a prediction of a sensor measurement" may be understood as the neural network being a generative model such as generator of a generative adversarial network or a diffusion-based model such as stable diffusion. The prediction about sensor measurements may especially be understood as the neural network providing images for including the images in a dataset for training and/or testing another machine learning system.

It is generally understood that the term "sensor measurement" also covers the result of preprocessing on otherwise raw or already preprocessed sensor measurement by some form of preprocessing method, e.g., smoothing or extracting statistical features.

The neural network comprises a weight matrix, preferably a plurality of weight matrices. The weight matrices are preferably assigned to layers of the neural network, i.e., the weight matrix may be of a layer of the neural network.

In the method for training, the weight matrix is decomposed using singular value decomposition. This may be understood as decomposing the real-valued weight matrix $W$ of shape $(m \times n)$ according to the formula

$$W = U\Sigma V^T,$$

where $U$ is an m $\times$ m orthogonal matrix whose columns are the left-singular vectors of $W$, $\Sigma$ is an $m \times n$ rectangular diagonal matrix with non-negative singular values $(\sigma_i)$ on the main diagonal, arranged in descending order $(\sigma_1 \geq \sigma_2 \geq ... \geq \sigma_r)$, where $r$ is the rank of $W$, and $V^T$ is the transpose of an $n \times n$ orthogonal matrix $V$ whose columns are the right-singular vectors of $W$.

An SVD of a weight tensor may be achieved by stacking sub-matrices of the tensor into a single matrix, performing SVD on this single matrix and reshaping the resulting decomposition into a tensor representation.

For groping, the singular values $\sigma_i$ may be extracted from the diagonal of $\Sigma$. The singular vectors can then be grouped based on their magnitude, i.e., their absolute value. For example, the absolute values of the singular values may be obtained and the list of absolute values may then be sorted. Afterwards, the list may be split into groups. The splitting into groups may be performed according to a variety of specific approaches. For example, the range of absolute values may be split into a predefined number of ranges and singular values corresponding to the absolute values may be sorted into a group according to the specific range segment the respective absolute value belongs to. Likewise, the singular values may also be grouped such that each group contains an equal amount of singular values. Alternatively, the grouping of singular values may also be based on an exponential spacing of the ranges or based on percentiles of the absolute values.

For each group $k$ of singular values, a corresponding set of columns from $U$ and $V$ may then be selected based on the singular values assigned to that group $k$. For example, if singular values $\{\sigma_1, \sigma_5, \sigma_7\}$ are assigned to group $k$. Then the corresponding columns $u_1$, $u_5$, $u_7$ from $U$ and rows $v_1^T, v_5^T, v_7^T$ from $V^T$ are selected. These form the matrices $U_k$ and $V_k^T$ respectively. A diagonal matrix $\Sigma_k$ is also formed using the singular values $\{\sigma_1, \sigma_5, \sigma_7\}$ on its diagonal.

Technically, the columns and rows corresponding to the indices of the singular values in the original $\Sigma$ matrix are selected, as the singular values themselves are just scalars.

The matrices $U_k$, $\Sigma_k$ and $V_k^T$ for each group $k$ can then be multiplied together to reconstruct a low-rank approximation of the original weight matrix corresponding to that group ( $A_k = U_k \Sigma_k V_k^T \Sigma$ ).

The output of a forward operation of the layer comprising the weight matrix may then be achieved by multiplying an input of the layer comprising the weight matrix with a sum of the matrices $A_k$.

Training the neural network by adapting the singular values and/or singular vectors may be understood as optimization specific components of the decomposed weight matrix, e.g., based on a loss value derived from a loss function. More specifically training focusses on optimizing components of the weight matrix corresponding to the lowest singular values. This targeted optimization can especially be achieved in two ways:

*Adapting Singular Values and Vectors Directly*: In this embodiment, the adaptation operates directly on the singular values ($\sigma_i$) and/or the corresponding singular vectors (columns of $U$ and rows of $V^T$). This may involve modifying the singular values themselves according to error backpropagation. This direct adaptation offers fine-grained control over the individual components of the weight matrix and allows for adjusting what is actually optimized in very fine detail. Adapting only the singular values and vectors associated with the lowest singular values, while keeping the others fixed, allows the network to refine less dominant features without significantly altering the core representations encoded by the higher singular values.

*Adapting the Reconstructed Group Matrices ($A_k$)*: In this alternative embodiment, the singular values and their corresponding vectors associated with the lowest singular values are used to reconstruct one or more group matrices $A_k$. Adaptation is then performed on these matrices $A_k$ instead of directly on the singular values and vectors. This may involve applying standard optimization algorithms (like SGD or Adam) with a reduced learning rate or utilizing parameter-efficient fine-tuning (PEFT) techniques like LoRA or AdaLoRA. This optimization is guided by a loss function, calculated based on the output of the neural network and the true desired outputs for respective training inputs. The advantage of working with the matrices $A_k$ is that it allows for leveraging existing optimization and fine-tuning methods while still benefiting from the selective adaptation based on the singular value grouping. Restricting the adaptation to the group(s) corresponding to the lowest singular values, either a single group or a predefined number of the lowest singular value groups, allows for selectively refining certain aspects of the model's representation without affecting the most dominant features.

Both of these approaches target the adaptation-that is, the modification during the training process-to the components associated with the lowest singular values. Advantageously, this strategy can be particularly beneficial for preventing catastrophic forgetting, as it allows the network to learn new information by primarily adjusting less important directions in the space of the weight matrix, preserving the knowledge encoded in the more dominant, higher singular value components. The specific choice between adapting the singular values/vectors directly or adapting the matrices $A_k$ may depend on factors such as the desired level of control, computational efficiency, and compatibility with existing training frameworks. In both cases, the selection of either the group corresponding to the absolute lowest singular values or a predefined number of the groups corresponding to the lowest singular values may be performed. In the first case, the group corresponding to the smallest singular values is selected. In the latter case, a predefined number of groups is selected, where the predefined number may be dynamically adjusted during training or may be user-defined and fixed. This selection may depend on the dataset on which the neural network is adapted. For example, simpler datasets may require adapting singular values of fewer groups since adapting more groups could possibly involve redundant parameters in training.

The selection of the number of groups, i.e., which groups to adapt in the method, can be understood as a hyperparameter of the training method and obtaining the exact number of groups to be adapted can be achieved using standard hyperparameter optimization strategies such as grid search.

Compared the known methods such as PiSSA, which freeze groups with low singular values, the invention advantageously proposes to do the opposite to counter catastrophic forgetting.

Additionally, only optimizing the groups corresponding to the lowest singular values allows for greatly reducing the total amount of weights adapted during training of the neural network. This leads to an improved efficiency and reduced computational complexity during training.

In preferred embodiments, it is possible that the singular values and/or singular vectors of only a predefined plurality of groups corresponding to the lowest singular values are adapted and wherein for each group distinct and non-zero learning rate is used and/or a distinct optimization algorithm is chosen.

Advantageously, the inventors found that assigning different learning rates to each of the selected groups allows for fine-grained control over how different features are adapted. Groups corresponding to more important features (e.g., those with higher singular values, even within the "lowest" set of groups) can be assigned lower learning rates to preserve previously learned information that may not be of the highest relevance but still be important. Conversely, groups representing less critical or task-specific features (e.g., those with lower singular values) can be assigned higher learning rates, enabling faster adaptation to the new task.

An advantage of using different optimization algorithms is that optimization can be tailored to diverse features. Different singular value groups typically capture different types of features or representations. These groups may have distinct statistical properties or exhibit different learning dynamics. By using distinct optimization algorithms for different groups, the training process can be tailored to the specific characteristics of each group. For instance, one group might benefit from an adaptive optimization algorithm like Adam, while another might be better suited for SGD with momentum. The authors found that this flexibility allows for optimizing each group with the most appropriate algorithm, leading to faster convergence and better overall performance.

In the same or other preferred embodiments, it is possible that adapting the singular values and/or singular vectors comprises applying a parameter-efficient fine-tuning (PEFT) method to the group or groups.

PEFT methods aim to reduce the number of trainable parameters compared to full fine-tuning. Integrating PEFT into this SVD-based adaptation scheme further enhances parameter efficiency and reduces computational complexity. This is especially beneficial when dealing with large pre-trained models, where fine-tuning the entire weight matrix can be computationally prohibitive. By applying PEFT to the selected singular value groups, the number of adaptable parameters is reduced even further, leading to faster training, lower memory requirements, and reduced risk of overfitting.

Possible embodiments of PEFT methods that can be applied are LoRA, AdaLoRA, DyLoRA, or BiFit.

In the preferred or other embodiments, it is possible that grouping the singular values comprises dividing the singular values into a predefined number of groups based on equal-width ranges of magnitudes of the singular values.

This may be understood as collecting the largest absolute singular value and the smallest absolute singular value from $\Sigma$ and splitting the range of absolute singular values into a predefined number of ranges, wherein the predefined amount can be considered a hyperparameter of the training method. Magnitude of the singular values and absolute singular values may be considered as referring to the same thing.

Advantageously, the authors found that equal-width bins ensure uniform coverage of the entire range of singular values. This avoids potential biases towards certain regions of the spectrum, allowing for balanced adaptation across different levels of feature importance. This uniform coverage can be particularly beneficial when the distribution of singular values is relatively uniform or when prior knowledge about the relative importance of different singular values is lacking.

In some embodiments, grouping the singular values comprises assigning the singular values to groups based on percentile thresholds of their magnitudes.

This may be understood as considering the distribution of the magnitudes of the singular values and defining a predefined number of percentile thresholds, for example, the 10th percentile, the 20th percentile, and so on. The singular values are then assigned to groups based on these percentile thresholds. A singular value is assigned to a specific group when the magnitude of the singular value is between two predefined percentile thresholds. As an example, one may define two percentile thresholds, namely the 10th percentile and the 20th percentile, wherein all singular values with magnitudes larger than the singular value of the 10th percentile and smaller than the singular value of the 20th percentile are inserted into one group. The predefined percentile thresholds may be understood as hyperparameters of the method.

Advantageously, the authors found that percentile-based grouping ensures a balanced distribution of singular values across the different groups, regardless of the specific range of magnitudes. This can be particularly beneficial when the distribution of singular values is skewed or heavily concentrated in certain regions. For example, if the majority of singular values are very small, equal-width binning might result in several groups containing very few singular values, while percentile-based grouping ensures that each group contains a similar proportion of the total number of singular values. This balanced distribution can lead to more stable and effective training, especially when combined with group-specific adaptation strategies.

In the preferred or other embodiments, training of the neural network is performed iteratively, wherein the singular value decomposition and grouping steps are performed after each iteration or after a predefined number of iterations.

This may be understood as performing the training of the neural network in multiple iterations or multiple training steps, where each iteration or where after a predefined number of iterations the steps of performing singular value decomposition, grouping singular values, and adapting the singular values or the $A_k$ matrices are executed. After a predefined number of iterations or after each iteration, the updated weight matrix of the neural network is subjected to a new singular value decomposition and based on the singular values of this singular value decomposition, new groups are defined. The singular values and vectors of the updated weight matrix are then grouped into the new groups, meaning that singular values and vectors that belonged to one specific group in the previous iteration may now belong to a different group after regrouping or that completely new singular values are now presented. One may, for example, repeat the singular value decomposition and the grouping step after each training epoch.

Advantageously, the authors found that this iterative approach allows the grouping of singular values to adapt to the changing importance of different components within the weight matrix during the training process. As the network learns and the weight matrix is updated, the relative importance of different singular values may shift. By recomputing the SVD and regrouping the singular values periodically, the adaptation process can dynamically adjust its focus to the most relevant parts of the weight matrix at each stage of training. This can lead to more effective and efficient fine-tuning, particularly in complex learning scenarios where the importance of different features may evolve over time. Furthermore, dynamic regrouping can help to escape local optima and improve the overall performance of the fine-tuned network.

In another aspect, the invention concerns a computer-implemented method for using the neural network to determine a control signal for controlling an actuator and/or a display of a technical system, the method comprising the steps of:

- Obtaining a neural network according to any one embodiment of the method for training;
- Providing an input characterizing at least one sensor measurement to the neural network;
- Determining, by the neural network, an output characterizing a classification and/or regressions result of the at least one sensor measurement and/or a probability of the sensor measurement to occur among a set of sensor measurements;
- Determining the control signal based on the output.

Obtaining a neural network according to the method for training may especially be understood as the steps of the respective embodiments of the method for training being part of the method for using the neural network. Alternatively, it may be understood as obtaining the neural network from a source that has trained the neural network according to an embodiment of the training method as presented above, e.g., by downloading it from the internet or receiving it via some form of digital data transfer, e.g., by a computer-readably storage device.

If the output of the neural network is a classification and/or regression result, the control signal may, for example, be chosen automatically in correspondence with the classification. If the output characterizes a probability, the output may be used for, e.g., anomaly detection in the provided input. For example, if the characterized probability is low, the control signal may be chosen to switch an automatic operation of the actuator over to a human operator.

In another aspect, the invention concerns a training system, which is configured to carry out the training method.

In another aspect, the invention concerns a control system, which is configured to carry out the method for determining a control signal.

In another aspect, the invention concerns a computer program that is configured to cause a computer to carry out any one of the methods presented above with all of its steps if the computer program is carried out by a processor.

In another aspect, the invention concerns a machine-readable storage medium on which the computer program is stored.

Embodiments of the invention will be discussed with reference to the following figures in more detail. The figures show:

Figure 1   a training system for training a neural network;

Figure 2   a control system using the neural network to control an actuator or a display;

Figure 3   the control system controlling an at least partially autonomous robot;

Figure 4   the control system controlling a manufacturing machine.

Description of the embodiments

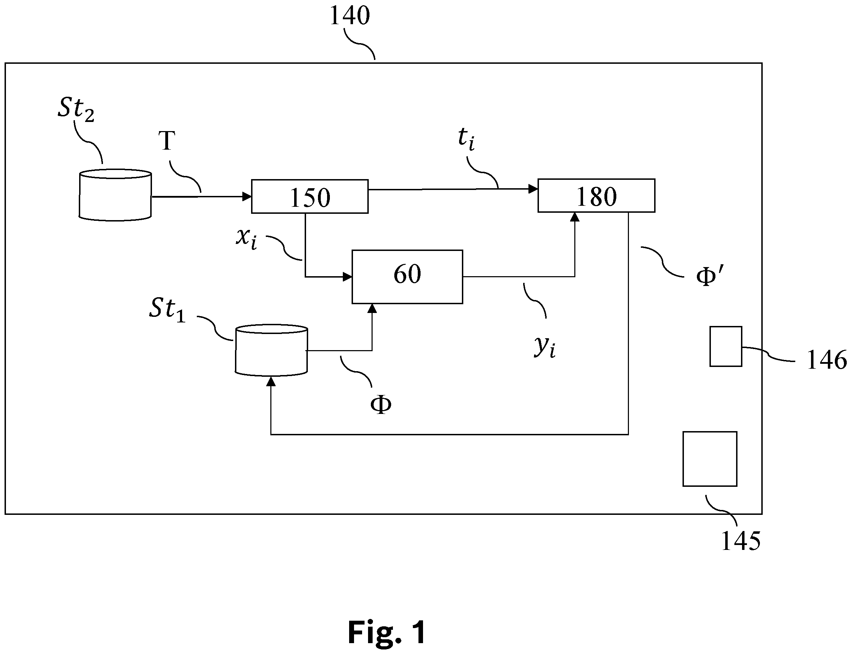

Figure 1 shows an embodiment of a training system (140) for training a neural network (60) using a training data set (T). The training data set (T) comprises a plurality of inputs ($x_i$), each characterizing one or multiple sensor measurements as described above, which are used for training the neural network (60). The training data set (T) further comprises, for each input ($x_i$), a desired output ($t_i$) which corresponds to the input ($x_i$) and characterizes a classification and/or regression result of the input ($x_i$).

The neural network (60) comprises parameters ($\Phi$) which define how an input ($x_i$) to the neural network (60) is mapped to a corresponding output ($y_i$). The parameters comprise weight matrices or weight tensors of the neural network (60). In some embodiments, a singular value decomposition (SVD) on one or more weight matrices or weight tensors of the neural network (60) may be performed before training. The singular values resulting from the SVD are then grouped into a plurality of groups. This grouping may be based on equal-width ranges of magnitudes, percentile thresholds, or other suitable criteria. The number of groups and the specific grouping method may be predefined or dynamically adjusted.

For training, a training data unit (150) accesses a computer-implemented database ($St_2$), with the database ($St_2$) providing the training data set (T). The training data unit (150) determines from the training data set (T), preferably randomly, at least one input ($x_i$) and the desired output ($t_i$) corresponding to the input ($x_i$) and transmits the input ($x_i$) to the neural network (60). The neural network (60) then determines an output ($y_i$) based on the input ($x_i$) and its current parameters, i.e., weight matrices.

The desired output ($t_i$) and the determined output ($y_i$) are transmitted to a modification unit (180). Based on these values, the modification unit (180) then determines new parameters ($\Phi'$) for the neural network (60). Specifically, the modification unit (180) may compare the desired output ($t_i$) and the determined output ($y_i$) using a loss function. The loss function determines a loss value that characterizes how far the determined output ($y_i$) deviates from the desired output ($t_i$). Various loss functions, such as negative log-likelihood, mean squared error, or others suitable for the specific task, are conceivable. The determined output ($y_i$) and the desired output ($t_i$) may each comprise a plurality of sub-components, for example, in the form of tensors, where a sub-signal of the desired output ($t_i$) corresponds to a sub-component of the determined output ($y_i$). In such cases, a loss value may be determined for each corresponding sub-component and combined, for example, using a weighted sum, to form an overall loss value. Specific embodiments of sub-components are tensors used in supervised training for object detection, e.g., a tensor describing the presence or class of objects in a corresponding image used as input ($x_i$), another tensor describing a location of the respective objects, and another tensor describing the size dimensions of the respective objects.

The modification unit (180) may adapt the parameters of the neural network (60) based on the computed loss value and the decomposed weight matrix or weight tensor. This adaptation may involve modifying only the singular values and/or singular vectors corresponding to group of lowest singular values, or a predefined number of groups corresponding to the lowest singular values. The adaptation may be performed either directly on the singular values and vectors or on reconstructed matrices ($A_k$) formed from the grouped singular values and vectors. Distinct and non-zero learning rates and/or distinct optimization algorithms may be used for each group during adaptation. Suitable optimization algorithms include, but are not limited to, stochastic gradient descent, Adam, AdamW, or second-order methods. Parameter-efficient fine-tuning (PEFT) methods like LoRA, adapters, or others may also be applied during the adaptation process.

The described training process may be repeated iteratively. IN alternative embodiments, the singular value decomposition and grouping steps may be performed after each iteration or after a predefined number of iterations, allowing for dynamic adjustment of the groups during training. The training may continue for a predefined number of iterations, until the loss value falls below a predefined threshold, or until a performance metric on a validation set reaches a desired level.

The training system (140) may comprise at least one processor (145) and at least one machine-readable storage medium (146) containing instructions which, when executed by the processor (145), cause the training system (140) to execute the described training method.

The specific modality of the sensor measurement or sensor measurements characterized by the inputs ($x_i$) is chosen according to the eventual task of the neural network (60). For example, suitable sensor measurements may be obtained from the real world and annotated with suitable desired outputs ($t_i$) to form a data set (T) for supervised learning.

In other embodiments of the training system (140), the neural network (60) may be configured to model a probability distribution of the inputs ($x_i$) of the data set. In these embodiments, the neural network (60) may be a normalizing flow, an encoder of a variational auto encoder, or a diffusion model.

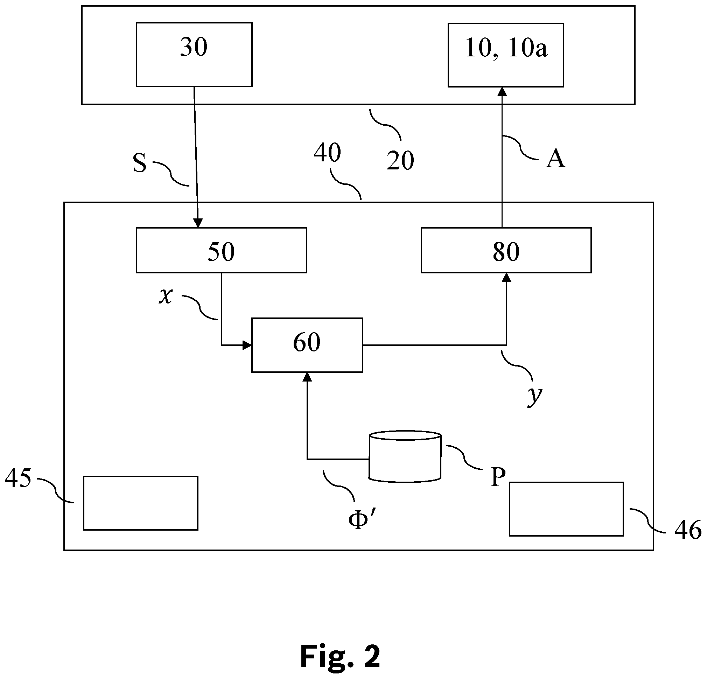

Figure 2 shows an embodiment of a control system (40) controlling an actuator (10) in the actuator's environment (20). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input (x). Alternatively, in case of no receiving unit (50), each sensor signal (S) may directly be taken as an input (x). The input (x) may, for example, be given as an excerpt from the sensor signal (S), e.g., a subsection of an image. Alternatively, the sensor signal (S) may be processed to yield the input (x). In other words, the input (x) is provided in accordance with the sensor signal (S).

The input (x) is then passed on to the neural network (60).

The neural network (60) is configured to accept the input (x) aand has been trained according to the training method described above using the respectively suitable inputs and outputs in a supervised fashion. The neural network (60) is parametrized by parameters ($\Phi$),

which are stored in and provided by a parameter storage ($St_1$).

The neural network (60) determines an output signal ($y$) from the input signals ($x$). The output signal ($y$) comprises information that assigns one or more labels to the input signal ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

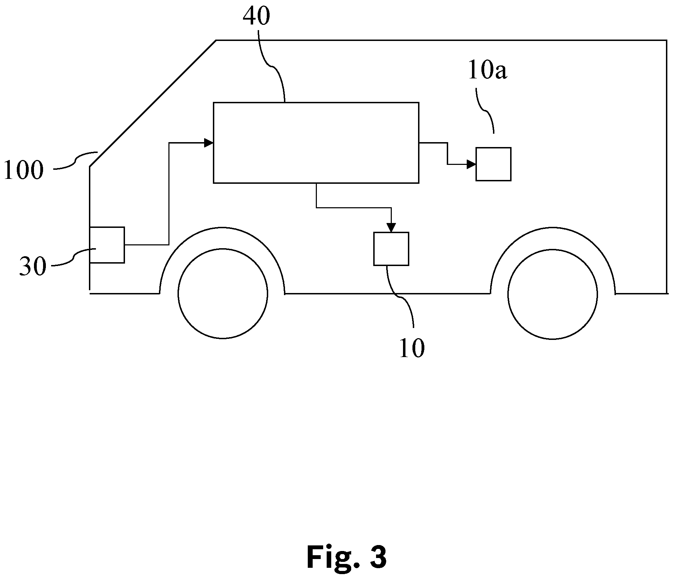

Figure 3 shows an embodiment where the control system (40) controls an at least partially autonomous robot (100), such as an at least partially autonomous vehicle (100). The sensor (30) may incorporate various sensor modalities, including one or more video sensors, radar sensors, ultrasonic sensors, and/or LiDAR sensors. These sensors may be integrated into the vehicle (100) or positioned externally. The input ($x$) could be, for example, an image, a point cloud, or a combination of sensor data from multiple sensors (30). The neural network (60), trained according to the previously described methods, could then function as an image classifier, object detector, or a more general sensor fusion network.

The neural network (60) may be configured to detect and classify objects in the robot's vicinity based on the input ($x$). The output ($y$) may characterize the location, type (e.g., pedestrian, vehicle, tree), and other relevant attributes of detected objects. The control signal (A) may then be determined based on this information to control the robot's actuators (10) and ensure safe interaction with its environment. In the case of vehicles (100), if a pedestrian is detected crossing the road, the control signal (A) may trigger braking or steering maneuvers to avoid a collision.

Alternatively or additionally, the output ($y$) may characterize a probability of the input ($x$) to occur in the real world. If the probability is equal to or below a pre-

defined threshold, this may be understood as the input ($x$) characterizing an anomaly with respect to what the neural network (60) has seen during training, i.e., the data from the data set (T). In case of such a detection of an anomalous input ($x$), the control signal (A) may be chosen to hand over automatic operation of the actuator (10) to a human operator or driver.

The actuator (10), which may be integrated into the robot (100), could be any component responsible for controlling the robot's movement or providing feedback to an operator or a driver. This includes brakes, propulsion systems, engines, drivetrains, steering mechanisms, and display interfaces (10a). The control signal (A) may govern these actuators to execute appropriate actions, such as adjusting speed, changing direction, or displaying warnings. For instance in the case of vehicles (100), the control signal (A) might activate the vehicle's braking system if a collision is imminent or display a warning signal on the dashboard (10a) if the vehicle deviates from its lane. The warning signal could be visual, auditory (e.g., a warning sound), or haptic (e.g., a vibrating steering wheel).

The at least partially autonomous robot is not limited to vehicles. It may encompass various mobile robots, including aerial drones, underwater vehicles, or legged robots. For example, an autonomous lawnmower might use the system to avoid obstacles like trees or rocks, while a cleaning robot could use it to navigate a room and avoid furniture. In these cases, the sensor (30) might be a camera, LiDAR, or proximity sensors, and the actuator (10) would control the robot's movement and actions.

Furthermore, the invention can be applied to other robotic systems, such as a gardening robot. In this scenario, the sensor (30), potentially an optical sensor or multispectral camera, might be used to assess the state of plants. The output signal ($y$) could then provide information about the plant species, health, or need for watering or pruning. The actuator (10), such as a nozzle for spraying liquids or a cutting device, would be controlled by the control signal (A) to perform appropriate gardening tasks, like watering specific plants or trimming overgrown branches.

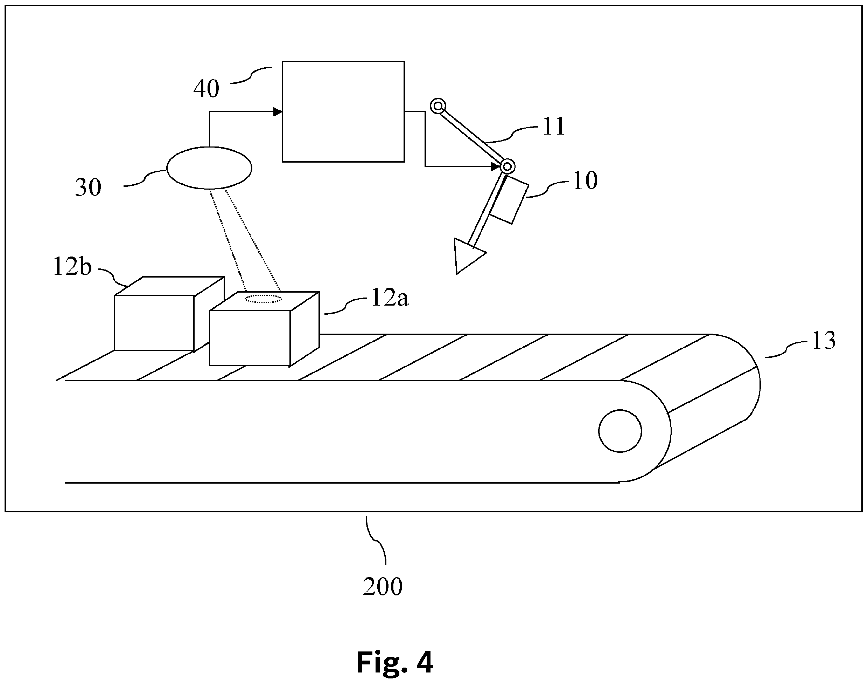

Figure 4 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The neural network (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the neural network (60) classifies, whether the manufactured product is broken and/or exhibits a defect. The actuator (10) may then be controlled as to remove the manufactured product from the transportation device.

The term "computer" may generally be understood as covering any devices for the processing of predefined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method for training a neural network (60), wherein the neural network is configured to accept an input ($x$) characterizing at least one sensor measurement (S) and provide an output ($y$) characterizing a classification and/or regressions result of the at least one sensor measurement (S) and/or a probability of the sensor measurement (S) to occur among a set of sensor measurements or wherein the neural network (60) is configured to provide an output ($y$) characterizing a prediction of a sensor measurement for creating a training and/or test dataset for training another machine learning system, wherein the method for training comprises the steps of:

   • Performing a singular value decomposition of a weight matrix or a weight tensor of the neural network (60);
   • Grouping singular values and corresponding singular vectors into a plurality of groups based on the magnitudes of the singular values;
   • Training the neural network (60) by adapting the singular values and/or singular vectors of only the group corresponding to the lowest singular values or adapting the singular values and/or singular vectors of only a predefined number of groups corresponding to the lowest singular values.

2. Method according to claim 1, wherein the singular values and/or singular vectors of only a predefined number of groups corresponding to the lowest singular values are adapted and wherein for each group distinct and non-zero learning rate is used and/or a distinct optimization algorithm is chosen.

3. Method according to claim 1 or 2, wherein adapting the singular values and/or singular vectors comprises applying a parameter-efficient fine-tuning (PEFT) method to the group or groups.

4. Method according to any one of the claims 1 to 3, wherein grouping the singular values comprises dividing the singular values into a predefined number of groups based on equal-width ranges of magnitudes of the singular values.

5. Method according to any one of the claims 1 to 3, wherein grouping the singular values comprises assigning the singular values to groups based on percentile thresholds of their magnitudes

6. Method according to anyone of the previous claims, wherein training of the neural network (60) is performed iteratively, wherein the singular value decomposition and grouping steps are performed after each iteration or after a predefined number of iterations.

7. Computer-implemented method for using a neural network (60) according to any one of the previous claims to determine a control signal (A) for controlling an actuator (10) and/or a display (10a) of a technical system, the method comprising the steps of:

   • Obtaining a neural network (60) according to any one of the previous claims;
   • Providing an input (x) characterizing at least one sensor measurement (S) to the neural network (60);
   • Determining, by the neural network (60), an output (y) characterizing a classification and/or regressions result of the at least one sensor measurement (S) and/or a probability of the sensor measurement (S) to occur among a set of sensor measurements;
   • Determining the control signal (A) based on the output (y).

8. Training system (140), which is configured to carry out the training method according to any one of the claims 1 to 6.

9. Control system (40), which is configured to carry out the method according to claim 7.

10. Computer program that is configured to cause a computer to carry out the method according to any one of the claims 1 to 7 with all of its steps if the computer program is carried out by a processor (45, 145).

11. Machine-readable storage medium (46, 146) on which the computer program according to claim 10 is stored.

**Amended claims in accordance with Rule 137(2) EPC.**

1. Computer-implemented method for training a neural network (60), wherein the neural network is configured to accept an input (x) characterizing at least one sensor measurement (S) and provide an output (y) characterizing a classification and/or regressions result of the at least one sensor measurement (S) and/or a probability of the sensor measurement (S) to occur among a set of sensor measurements or wherein the neural network (60) is configured to provide an output (y) characterizing a prediction of a sensor measurement for creating a training and/or test dataset for training another machine learning system, wherein the method for training comprises the steps of:

   • Performing a singular value decomposition of a weight matrix or a weight tensor of the neural network (60);
   • Grouping singular values and corresponding singular vectors into a plurality of groups based on the magnitudes of the singular values;
   • Training the neural network (60) by adapting the singular values and/or singular vectors of only the group corresponding to the lowest singular values or adapting the singular values and/or singular vectors of only a predefined number of groups corresponding to the lowest singular values.

2. Method according to claim 1, wherein the singular values and/or singular vectors of only a predefined number of groups corresponding to the lowest singular values are adapted and wherein for each group distinct and non-zero learning rate is used and/or a distinct optimization algorithm is chosen.

3. Method according to claim 1 or 2, wherein adapting the singular values and/or singular vectors comprises applying a parameter-efficient fine-tuning (PEFT) method to the group or groups.

4. Method according to any one of the claims 1 to 3, wherein grouping the singular values comprises dividing the singular values into a predefined number of groups based on equal-width ranges of magnitudes of the singular values.

5. Method according to any one of the claims 1 to 3, wherein grouping the singular values comprises assigning the singular values to groups based on percentile thresholds of their magnitudes

6. Method according to anyone of the previous claims, wherein training of the neural network (60) is performed iteratively, wherein the singular value decomposition and grouping steps are performed after each iteration or after a predefined number of iterations.

7. Computer-implemented method for using a neural network (60) according to any one of the previous claims to determine a control signal (A) for controlling an actuator (10) and/or a display (10a) of a technical system wherein the neural network (60) is configured to provide an output (y) characterizing a classification and/or regression result of the at least one sensor measurement (S) and/or a probability of the sensor measurement (S) to occur among a set of sensor measurements,, the method comprising the steps of:

   • Obtaining a neural network (60) according to any one of the previous claims;
   • Providing an input (x) characterizing at least one sensor measurement (S) to the neural network (60);
   • Determining, by the neural network (60), an output (y) characterizing a classification and/or regressions result of the at least one sensor measurement (S) and/or a probability of the sensor measurement (S) to occur among a set of sensor measurements;
   • Determining the control signal (A) based on the output (y).

8. Training system (140), which is configured to carry out the training method according to any one of the claims 1 to 6.

9. Control system (40), which is configured to carry out the method according to claim 7.

10. Computer program that is configured to cause a computer to carry out the method according to any one of the claims 1 to 7 with all of its steps if the computer program is carried out by a processor (45, 145).

11. Machine-readable storage medium (46, 146) on which the computer program according to claim 10 is stored.

**Fig. 1**

EP 4 749 523 A1

Fig. 2

**Fig. 3**

EP 4 749 523 A1

**Fig. 4**

Europäisches
Patentamt

European
Patent Office

Office européen
des brevets

# EUROPEAN SEARCH REPORT

**Application Number**

EP 24 21 5197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENGWEI SUN ET AL: "SVFit: Parameter-Efficient Fine-Tuning of Large Pre-Trained Models Using Singular Values", ARXIV.ORG, CORNELL UNIVERSITY LIBRARY, 201 OLIN LIBRARY CORNELL UNIVERSITY ITHACA, NY 14853, 9 September 2024 (2024-09-09), XP091879525, * pages 2-5; figures 1-3 * ----- | 1-11 | INV. G06N3/045 G06N3/0985 |

**TECHNICAL FIELDS SEARCHED (IPC)**

G06N

The present search report has been drawn up for all claims

| Place of search | Date of completion of the search | Examiner |
|---|---|---|
| The Hague | 28 April 2025 | Falco, Gabriele |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MENG et al.** *PiSSA: Principal Singular Values and Singular Vectors Adaptation of Large Language Models*, 03 April 2024, https://arxiv.org/html/2404.02948v1